# EUROPEAN PATENT SPECIFICATION

(11) **EP 3 821 377 B1**
(45) Date of publication and mention of the grant of the patent: **26.03.2025**
(21) Application number: 19852781.4
(22) Date of filing: 21.08.2019
(51) Int. Cl.: G06N 3/088, G06N 3/045, G06T 7/33, G06N 3/048

(54) **DEEP LEARNING-BASED COREGISTRATION**
AUF TIEFENLERNEN BASIERENDE CO-REGISTRIERUNG
RECALAGE BASÉ SUR L'APPRENTISSAGE PROFOND

(30) Priority: 24.08.2018 US 201862722663 P
(43) Date of publication of application: 19.05.2021
(73) Proprietor: Arterys Inc., San Francisco, CA 94107 (US)
(72) Inventor: NORMAN, Berk Dell, San Francisco, California 94118 (US); SALL, Sean Patrick, San Francisco, California 94107 (US); LIEMAN-SIFRY, Jesse, San Francisco, California 94107 (US); SIMONOVSKY, Martin, 263 01 Dobris (CZ); GOLDEN, Daniel Irving, Palo Alto, California 94303 (US); LAU, Hok Kan, San Francisco, California 94105 (US)
(74) Representative: Eisenführ Speiser
(86) International application number: PCT/US2019/047552
(87) International publication number: WO 2020/041503

(56) References cited:
- WO-A1-2017/091833
- WO-A1-2017/223560
- SIYUAN SHAN ET AL: "Unsupervised End-to-end Learning for Deformable Medical Image Registration", ARXIV.ORG, CORNELL UNIVERSITY LIBRARY, 201 OLIN LIBRARY CORNELL UNIVERSITY ITHACA, NY 14853, 23 November 2017 (2017-11-23), XP081308245
- YUNHAN ZHAO ET AL: "Spatial Transformer Introspective Neural Network", ARXIV.ORG, CORNELL UNIVERSITY LIBRARY, 201 OLIN LIBRARY CORNELL UNIVERSITY ITHACA, NY 14853, 16 May 2018 (2018-05-16), XP080879065
- YIPENG HU ET AL: "Adversarial Deformation Regularization for Training Image Registration Neural Networks", ARXIV.ORG, CORNELL UNIVERSITY LIBRARY, 201 OLIN LIBRARY CORNELL UNIVERSITY ITHACA, NY 14853, 27 May 2018 (2018-05-27), XP081137814, DOI: 10.1007/978-3-030-00928-1_87
- MARTIN SIMONOVSKY ET AL: "A Deep Metric for Multimodal Registration", ARXIV.ORG, CORNELL UNIVERSITY LIBRARY, 201 OLIN LIBRARY CORNELL UNIVERSITY ITHACA, NY 14853, 17 September 2016 (2016-09-17), XP080812931
- BOLIN SHAO: "Pericardium Segmentation in Non-Contrast Cardiac CT Images Using Convolutional Neural Networks. Master' s thesis in Master Programme Biomedical Engineering", CHALMERS UNIVERSITY OF TECHNOLOGY, 2016, pages 1 - 65, XP055776298
- YIPENG HU ET AL.: "Adversarial Deformation Regularization for Training Image Registration Neural Networks", 27 May 2018 (2018-05-27), pages 1 - 9, XP081137814
- M. HOSSEIN EYBPOSH ET AL.: "Segmentation and Classification of Cine-MR Images Using Fully Convolutional Networks and Handcrafted Features", SHARIF UNIVERSITY OF TECHNOLOGY, 8 September 2017 (2017-09-08), pages 1 - 9, XP055687929

## Description

### TECHNICAL FIELD

### BACKGROUND

### Description of the Related Art

Recently, deep learning has shown promising results in automating the segmentation of various medical images^{1,2}. However, training of these deep learning algorithms requires large sets of training data from expert annotators. As such, using coregistration (spatial alignment) as a way to transfer one annotated mask or landmark across an entire image set is a valuable tool for reducing the number of manual labels required in a purely deep learning setting. Coregistration can also be used to spatially align annotated landmarks or masks from one image onto another and warp images into a common reference frame to ease manual or automated comparison.

Traditional coregistration methods iteratively optimize an objective function on each new pair of images to be coregistered on, which is a computationally expensive process and can take hours to complete on a given image volume. Deep learning-based coregistration is capable of calculating the deformation without iteratively optimizing an objective function. When coupled with a graphics processing unit (GPU) as a processing unit, this results in a significantly reduced computational cost for computing the registration.

Traditional coregistration methods calculate displacement vector fields across all image pairings through a variety of iterative methods such as elastic-type modeling³, statistical parametric mapping⁴, and free-form deformation with b-splines⁵.

Frameworks for using deep convolutional neural networks (CNNs) to perform variants of coregistration on medical imaging are beginning to emerge. The majority of these methods are focused on creating deformation fields that minimize the difference between a pair of images. Hu et al. in particular proposed a weakly supervised method for registering magnetic resonance (MR) images onto intraoperative transrectal ultrasound prostate images⁶. Their method learns both affine transformation for global alignment of one image onto another as well as dense deformation fields (DDFs) of one image onto another. However, the method described in Hu et al. requires anatomical landmark points for training the model, the collection of which is time consuming and expensive. Balakrishnan et al. proposed a fully unsupervised CNN for coregistration of 3D MRI brain datasets where the loss function is purely based on the raw image data⁷. The approach of Balakrishnan et al. only learns the DDF of two images and accounts for affine transformations by feeding the DDF through a spatial transformation layer. SIYUAN SHAN ET AL: "Unsupervised End-to-end Learning for Deformable Medical Image Registration",ARXIV.ORG, CORNELL UNIVERSITY LIBRARY, 201, ITHACA, NY 14853, 23 November 2017, pertains to a machine learning system that receives learning data comprising a plurality of batches of unlabeled image sets, wherein each image set comprises a source image and target image that each represents a medical image scan of at least one patient; trains one or more convolutional neural networks (CNNs) models, based on the learning data, to learn one or more transformation functions between the plurality of unlabeled images that allow for coregistration of a target image onto a source image.

### BRIEF DESCRIPTION OF THE SEVERAL VIEWS OF THE DRAWINGS

Figure 1 is a diagram of training a system of convolutional neural networks (CNNs), referred to herein as DeformationNet, to create a DDF to warp images for coregistration, according to one non-limiting illustrated implementation.
Figure 2 shows one implementation of how a trained DeformationNet may be used to perform image stabilization, according to one non-limiting illustrated implementation.
Figure 3 shows one implementation of how a trained DeformationNet may be used to perform contour mask transferring, according to one non-limiting illustrated implementation.
Figure 4 shows two implementations of how a contour mask to coregister via DeformationNet may be selected, according to one non-limiting illustrated implementation.
Figure 5 shows an example of a slice where good segmentation probability maps and quality scores are derived and an example of a slice where bad segmentation probability maps and quality scores are derived, according to one non-limiting illustrated implementation.
Figure 6 is an example computing environment for one or more implementations of the present disclosure.

### DETAILED DESCRIPTION

The invention is defined in the appended independent claims. Embodiments of the invention are defined in the appended dependent claims.

### Unsupervised Cardiac Deep Learning Based Coregistration

### System Overview

The implementation described herein is a novel framework for unsupervised coregistration using CNNs, which is referred to herein as DeformationNet. DeformationNet takes a fully unsupervised approach to image coregistration. Advantageously, DeformationNet also explicitly stabilizes images or transfers contour masks across images. For the architecture of DeformationNet, global alignment is learned via affine deformations in addition to the DDF, and an unsupervised loss function is maintained. The use of an unsupervised loss function obviates the need for explicit human-derived annotations on the data, which is advantageous since acquisition of those annotations is one of the major challenges for supervised and semi-supervised CNNs. DeformationNet is also unique in that, in at least some implementations, it applies an additional spatial transformation layer at the end of each transformation step, which provides the ability to "fine-tune" the previously predicted transformation so that the network might correct previous transformation errors.

### Training

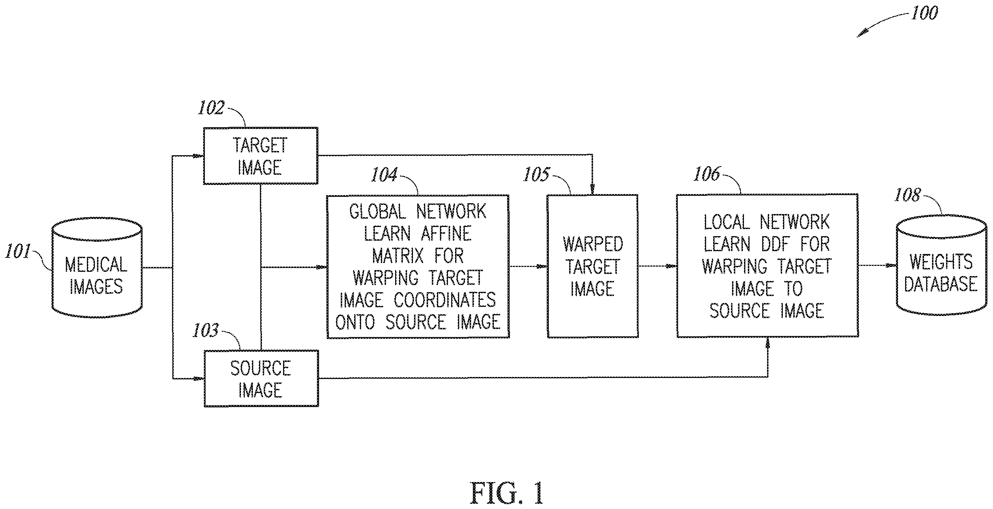

One implementation of the training phase of the DeformationNet system is shown in Figure 1. In at least some implementations, training of DeformationNet has two main processes:
1. Training a Global Network to learn global image alignment via an affine matrix for warping an inputted target image onto an inputted source image coordinate system (102, 103, and 105); and
2. Training a Local Network to learn a DDF for warping localized features of an inputted target image onto an inputted source image (105 and 106).

In at least some implementations, each pair of source and target images from a medical images database (101) represents two cardiac MR images from the same patient and possibly the same study. These cardiac MR series may include but are not limited to: Delayed Enhancement short axis (SAX) images, Perfusion SAX images, SSFP SAX images, T1/T2/T2* mapping SAX images, etc.

### Creating an affine transformation matrix for mapping a target image coordinates onto a source image coordinates (102, 103, and 104)

An affine transformation matrix with N or more affine transformation parameters, where N is an integer greater than or equal to 0, is learned via a Global Network (104) wherein the input is a pair of images that includes a source image (103) and a target image (102). The learned affine transformation parameters are defined as those parameters which, when applied to the target image, align the target image with the source image. In at least some implementations, the target image is resized to match the size of the source image before the affine matrix is learned.

In at least some implementations, the Global Network (104) is a regression network. A version of the Global Network (104) includes 32 initial convolutional filters. At least some implementations downsample using strides in the convolutional layers and there are 2 convolutional layers with kernel size 3, a batch normalization layer with a momentum rate, a dropout layer, and a ReLU nonlinearity layer before each downsampling operation. In at least some implementations, the last layer of the Global Network (104) is a dense layer mapping to the desired number of affine parameters.

In at least some implementations, the affine parameter outputs of the Global Network (104) are used as input to another affine spatial transformation layer that is bounded by different scaling factors for rotation, scaling, and zooming. The scaling factors control the amount of affine deformations that can be made to the target image. In at least some implementations, the affine spatial transformation matrix output by the affine spatial transformation layer includes a regularization operation that is implemented in the form of a bending energy loss function. A gradient energy loss function for regularization of the affine spatial transformation matrix may also be used, for example. This regularization further prevents the learned affine spatial transformation matrix from generating unrealistically large transformations.

### Creating a DDF for warping a transformed target image to match a source image (106)

In at least some implementations, a DDF is learned via a Local Network (106) wherein the input is a pair that includes a source image (102) and a target image (103). In some implementations, the target image (102) has first been warped onto the source image coordinates via an affine transformation matrix learned in the global network(104), providing a warped target image (105) to be input into the Local Network (106).

In at least some implementations, the Local Network (106) is a neural network architecture that includes a downsampling path and then an upsampling path. A version of such Local Network includes 32 initial convolutional filters and skip connections between the corresponding downsampling and upsampling layers. At least some implementations downsample using strides in the convolutional layers and there are 2 convolutional layers with kernel size 3, a batch normalization layer with a momentum rate, a dropout layer, and a ReLU nonlinearity layer before each downsampling or upsampling operation. This upsampling allows the DDF to be the same size as the inputted source and target images provided that padding was used.

In at least some implementations, the learned DDF output of the Local Network (106) goes through a freeform similarity spatial transformation layer. As an example, this freeform similarity spatial transformation layer can include affine transformations or dense freeform deformation field warpings⁵, or both. If affine transformations are used, they may be scaled to control the amount of deformations that can be made to the target images. In at least some implementations, the DDF also includes a regularization operation that is implemented in the form of a bending energy loss functions. A gradient energy loss function may also be used to regularize the DDF. This regularization prevents the learned DDF from generating deformations that are unrealistically large.

In at least some implementations, the CNN models may be updated via backpropagation with an adam optimizer and a mutual information loss function between the source image and the target image that has been warped by the DDF (*i.e.,* warped target image 105). Adam optimizer adjusts its learning rate through training using both the first and second moments of the backpropagated gradients. Other non-limiting examples of optimizers that may be used include stochastic gradient descent, minibatch gradient descent, adagrad, and root mean squared propagation. Other non-limiting examples of loss functions may include root mean squared error, L2 loss, L2 loss with center weighting, and cross correlation loss⁷ between the source image and the DDF that has been applied to the target image. These loss functions only depend on the raw input data and what the DeformationNet learns from that raw data. Advantageously, the absence of any dependence on explicit hand-annotations allows for this system to be fully unsupervised.

### Storing Weight of Trained Networks (108)

Weights of the trained Global Network (104) and Local Network (106) can be stored in storage devices including hard disks and solid state drives to be used later for image stabilization or segmentation mask transferring.

### Unsupervised Cardiac Deep Learning Based Image Stabilization Inference

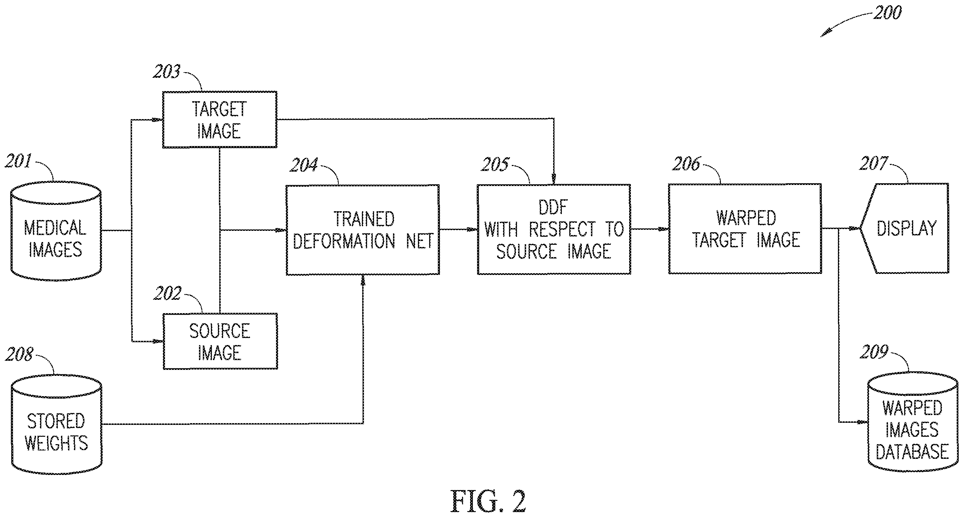

Figure 2 illustrates an implementation of performing inference on a trained DeformationNet for image stabilization. In this implementation, the input to DeformationNet includes a source image (202), and a target image (203) to be stabilized by warping the target image onto the source image. These image pairings may be selected from a database of medical images (201). Using the trained DeformationNet (204), discussed above, a DDF (205) with respect to the source image (202) is inferred. This DDF (205) is applied to the target image (203), creating a warped target image (206) that is stabilized with respect to the source image (202). The newly stabilized target image (206) may be displayed to the user via a display (207) and stored in a warped images database (209) including hard disks and solid state drives.

Image pairings that may be used for image stabilization inference include but are not limited to: images from the same slice of a cardiac MR image volume but captured at different time points; images from the same time point of a cardiac MR image volume but different slices; images from any image of the same MR image volume; images from distinct MR image volumes; images from other medical imaging that involve a time series such as breast, liver, or prostate DCE-MRI (dynamic contrast enhancement MRI); or images from fluoroscopy imaging.

### Unsupervised Cardiac Deep Learning Based Contour Mask Registration Inference

### Overview of Inference Steps

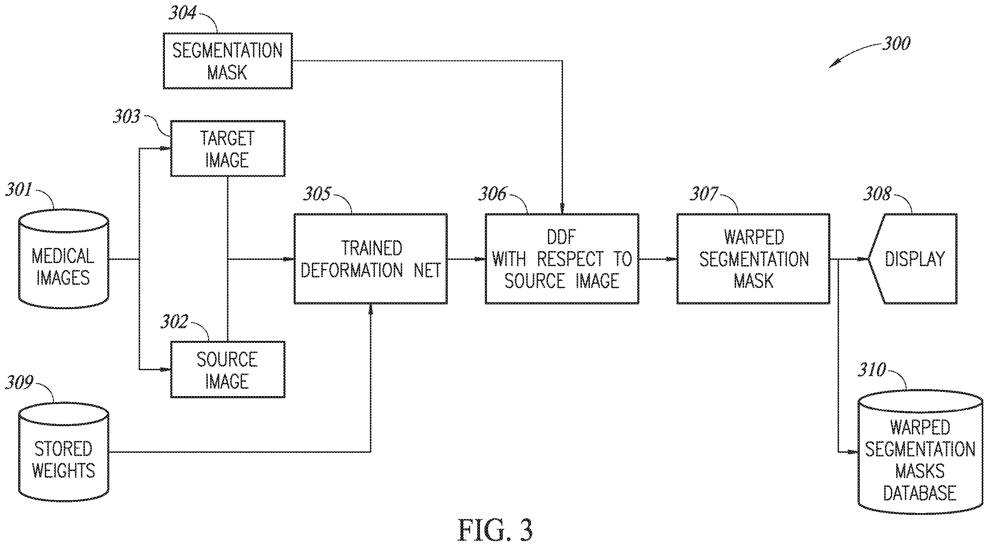

Figure 3 illustrates one implementation of performing inference with a trained DeformationNet for transferring segmentation masks from one image to another. In at least some of the implementations, the input to DeformationNet is a pair of 2D cardiac SAX MR images (source image 302 and target image 303) from a database of medical images (301), where one of the images has a corresponding segmentation mask (304) of ventricular contours, for instance, to include the left ventricular endocardium (LV endo), left ventricular epicardium (LV epi), and/or right ventricular endocardium (RV endo), for example. In at least some of the implementations, the segmentation mask (304) may correspond to the target image (303). Using the trained DeformationNet (305), a DDF (306) with respect to the source image is inferred. This DDF (306) is applied to the segmentation mask (304) corresponding to the target image (303) creating a warped segmentation mask (307) that has been warped onto the source image. The newly warped segmentation mask (307) can be displayed to the user via a display (308) and stored in a warped segmentation masks database (310) including but not limited to hard disks and solid state drives.

### Segmentation Mask Selection

Implementations of attaining the segmentations masks (304) shown in Figure 3 include, but are not limited to: having a user manually create the segmentation mask; and using a heuristic involving a previously trained CNN model to automatically create the segmentation mask.

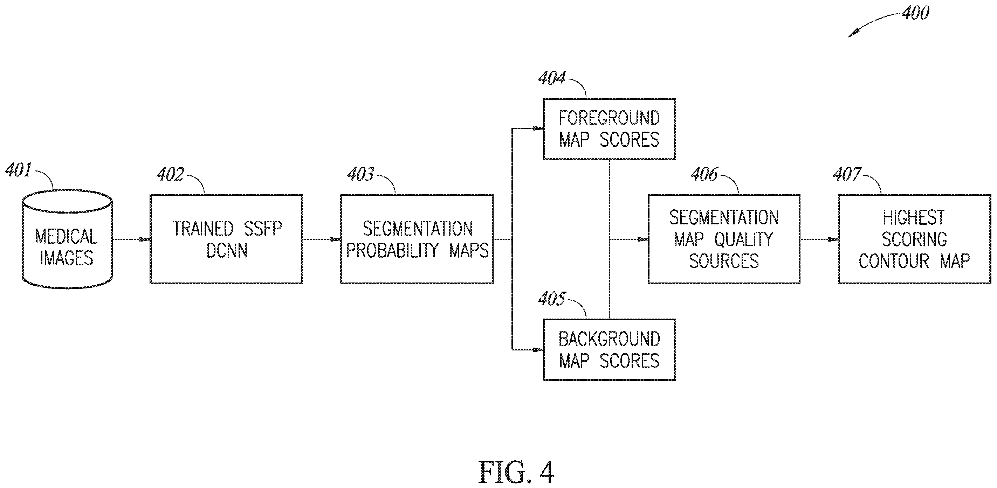

Figure 4 illustrates one implementation of using a heuristic and previously trained CNN to select a segmentation mask to transfer to other images. In this implementation, a group of 2D cardiac SAX MR images (401) is chosen for which segmentations are needed. Those images (401) are used as input to a previously trained CNN (402), as discussed above. In at least some implementations, the CNN (402) was previously trained to segment masks for the LV epi, LV endo, and RV endo in 2D SSFP MRs images. In those implementations, the output of the CNN (402) is a segmentation probability map (403) on a per-pixel basis for each 2D image.

The CNN (402) may not be able to accurately predict segmentations for every image, so it may be important to choose images with good quality segmentation masks as the target image for (303) (Figure 3). The segmentation probability maps (403) that are outputted from the previously trained CNN (402) are used to compute foreground map scores (404) and background map scores (405) for the given image. The map scores (404) and (405) are computed per pixel. The foreground mask scores (404) represent the probability that an image pixel belongs to one of the ventricular masks, and the background mask scores (405) represent the probability that the image pixel does not belong to one of the ventricular masks. The foreground map score (404) is calculated by taking the average of all probability map values above 0.5. The background map score (405) is calculated by taking the distance from 1 of all the probability map values below 0.5. A mask quality score (406) for that given slice prediction is then calculated by multiplying the background mask score (405) with the foreground mask score (404).

The general actions of the above described possible heuristic implementation are explained in the following example pseudocode:
1. for image in set of 2D images:
   a. probability_map = Previously_Trained_CNN_Segmentor(image)
   b. foreground_map_values = values of probability_map > 0.5
   c. foreground_score = mean(foreground_map_values)
   d. background_map_values = 1 - (values of probability_map <= 0.5)
   e. background_score = mean(background_mapvalues)
   f. quallity_score = foreground_score * background_score
2. select images with best quality

In at least some implementations, the image with the segmentation probability mask corresponding to the highest quality score across the group of 2D images will be treated as the single target image (407) and some or all of the other images will be treated as source images to which the target image's segmentation mask (304) will be warped.

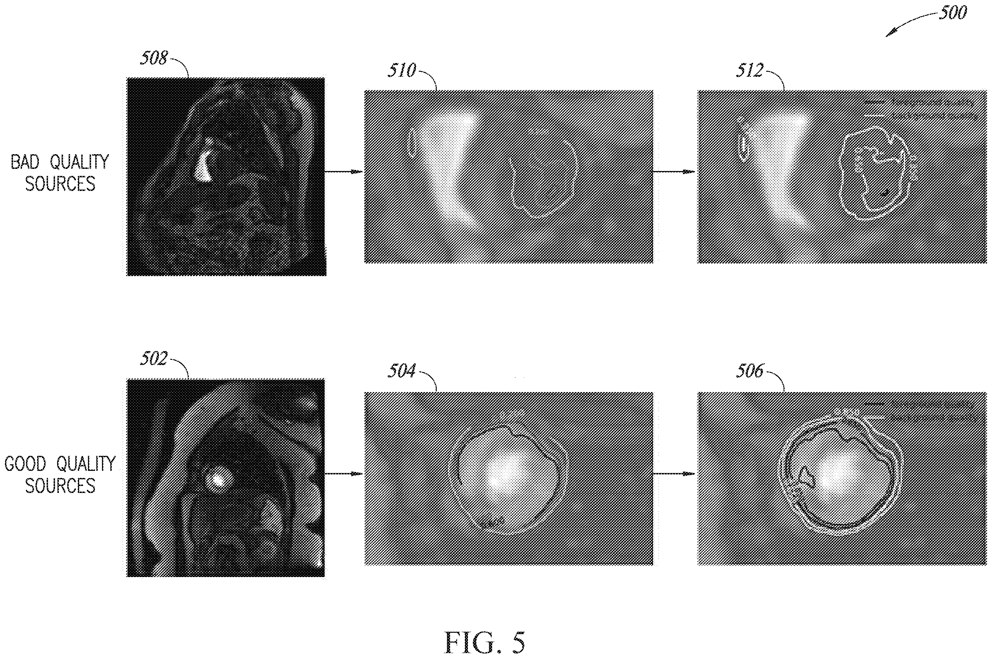

Figure 5 shows an example of how the heuristic described above may work in practice. Images (502) and (508) are examples of 2D SAX MR images that are to be fed into the CNN (402) (Figure 4). Images (504) and (510) are the probability map outputs of the CNN (402) for the LV epi of the images (502) and (508), respectively, represented as contour maps. The image (504) represents a good probability map. It has a clear boundary of high probability (represented by the black line of 0.8) around the LV epi and the probability drops quickly outside of the LV epi area. The image (510) represents a bad probability map. The contours around the LV epi are overall fairly low, there is only high probability at the very center of the LV epi. Additionally, there is a change in probability far outside of the LV epi area. Foreground and background maps for the images (504) and (510) are represented as contours in images (506) and (512), respectively. The black contours represent the foreground map values as calculated by act 1.b in the pseudocode above and the white contours represent the background map values as calculated by act 1.d in the pseudocode. Image (506) has high probability for the foreground map and background map, which would give it a high quality score. Image (510) has high probability for the background map but low for the foreground map, which would give it a low quality score and it would likely not be used as the segmentation mask to transfer across images.

### Example Computing Environment

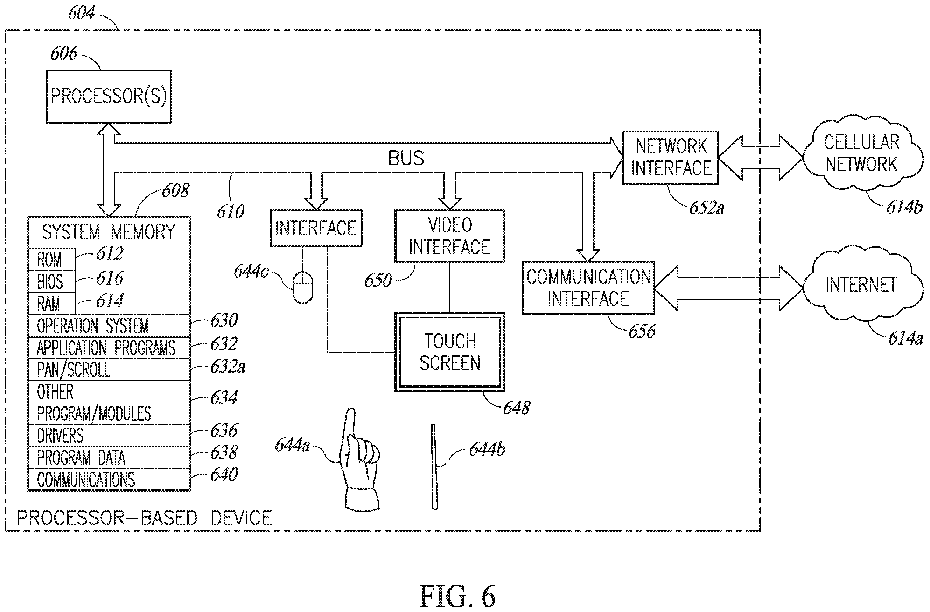

Figure 6 shows a processor-based device 604 suitable for implementing the various functionality described herein. Although not required, some portion of the implementations will be described in the general context of processor-executable instructions or logic, such as program application modules, objects, or macros being executed by one or more processors. Those skilled in the relevant art will appreciate that the described implementations, as well as other implementations, can be practiced with various processor-based system configurations, including handheld devices, such as smartphones and tablet computers, wearable devices, multiprocessor systems, microprocessor-based or programmable consumer electronics, personal computers ("PCs"), network PCs, minicomputers, mainframe computers, and the like.

The processor-based device 604 may include one or more processors 606, a system memory 608 and a system bus 610 that couples various system components including the system memory 608 to the processor(s) 606. The processor-based device 604 will at times be referred to in the singular herein, but this is not intended to limit the implementations to a single system, since in certain implementations, there will be more than one system or other networked computing device involved. Non-limiting examples of commercially available systems include, but are not limited to, ARM processors from a variety of manufactures, Core microprocessors from Intel Corporation, U.S.A., PowerPC microprocessor from IBM, Sparc microprocessors from Sun Microsystems, Inc., PA-RISC series microprocessors from Hewlett-Packard Company, 68xxx series microprocessors from Motorola Corporation.

The processor(s) 606 may be any logic processing unit, such as one or more central processing units (CPUs), microprocessors, digital signal processors (DSPs), application-specific integrated circuits (ASICs), field programmable gate arrays (FPGAs), etc. Unless described otherwise, the construction and operation of the various blocks shown in Figure 6 are of conventional design. As a result, such blocks need not be described in further detail herein, as they will be understood by those skilled in the relevant art.

The system bus 610 can employ any known bus structures or architectures, including a memory bus with memory controller, a peripheral bus, and a local bus. The system memory 608 includes read-only memory ("ROM") 1012 and random access memory ("RAM") 614. A basic input/output system ("BIOS") 616, which can form part of the ROM 612, contains basic routines that help transfer information between elements within processor-based device 604, such as during start-up. Some implementations may employ separate buses for data, instructions and power.

The processor-based device 604 may also include one or more solid state memories, for instance Flash memory or solid state drive (SSD) 618, which provides nonvolatile storage of computer-readable instructions, data structures, program modules and other data for the processor-based device 604. Although not depicted, the processor-based device 604 can employ other nontransitory computer- or processor-readable media, for example a hard disk drive, an optical disk drive, or memory card media drive.

Program modules can be stored in the system memory 608, such as an operating system 630, one or more application programs 632, other programs or modules 634, drivers 636 and program data 638.

The application programs 632 may, for example, include panning / scrolling 632a. Such panning / scrolling logic may include, but is not limited to logic that determines when and/or where a pointer (*e.g.,* finger, stylus, cursor) enters a user interface element that includes a region having a central portion and at least one margin. Such panning / scrolling logic may include, but is not limited to logic that determines a direction and a rate at which at least one element of the user interface element should appear to move, and causes updating of a display to cause the at least one element to appear to move in the determined direction at the determined rate. The panning / scrolling logic 632a may, for example, be stored as one or more executable instructions. The panning / scrolling logic 632a may include processor and/or machine executable logic or instructions to generate user interface objects using data that characterizes movement of a pointer, for example data from a touch-sensitive display or from a computer mouse or trackball, or other user interface device.

The system memory 608 may also include communications programs 640, for example a server and/or a Web client or browser for permitting the processor-based device 604 to access and exchange data with other systems such as user computing systems, Web sites on the Internet, corporate intranets, or other networks as described below. The communications programs 640 in the depicted implementation is markup language based, such as Hypertext Markup Language (HTML), Extensible Markup Language (XML) or Wireless Markup Language (WML), and operates with markup languages that use syntactically delimited characters added to the data of a document to represent the structure of the document. A number of servers and/or Web clients or browsers are commercially available such as those from Mozilla Corporation of California and Microsoft of Washington.

While shown in Figure 6 as being stored in the system memory 608, the operating system 630, application programs 632, other programs/modules 634, drivers 636, program data 638 and server and/or browser 640 can be stored on any other of a large variety of nontransitory processor-readable media (e.g., hard disk drive, optical disk drive, SSD and/or flash memory).

A user can enter commands and information via a pointer, for example through input devices such as a touch screen 648 via a finger 644a, stylus 644b, or via a computer mouse or trackball 644c which controls a cursor. Other input devices can include a microphone, joystick, game pad, tablet, scanner, biometric scanning device, etc. These and other input devices (*i.e.,* "I/O devices") are connected to the processor(s) 606 through an interface 646 such as touch-screen controller and/or a universal serial bus ("USB") interface that couples user input to the system bus 610, although other interfaces such as a parallel port, a game port or a wireless interface or a serial port may be used. The touch screen 648 can be coupled to the system bus 610 via a video interface 650, such as a video adapter to receive image data or image information for display via the touch screen 648. Although not shown, the processor-based device 604 can include other output devices, such as speakers, vibrator, haptic actuator, etc.

The processor-based device 604 may operate in a networked environment using one or more of the logical connections to communicate with one or more remote computers, servers and/or devices via one or more communications channels, for example, one or more networks 614a, 614b. These logical connections may facilitate any known method of permitting computers to communicate, such as through one or more LANs and/or WANs, such as the Internet, and/or cellular communications networks. Such networking environments are well known in wired and wireless enterprise-wide computer networks, intranets, extranets, the Internet, and other types of communication networks including telecommunications networks, cellular networks, paging networks, and other mobile networks.

When used in a networking environment, the processor-based device 604 may include one or more wired or wireless communications interfaces 614a, 614b (e.g., cellular radios, WI-FI radios, Bluetooth radios) for establishing communications over the network, for instance the Internet 614a or cellular network.

In a networked environment, program modules, application programs, or data, or portions thereof, can be stored in a server computing system (not shown). Those skilled in the relevant art will recognize that the network connections shown in Figure 6 are only some examples of ways of establishing communications between computers, and other connections may be used, including wirelessly.

For convenience, the processor(s) 606, system memory 608, network and communications interfaces 614a, 614b are illustrated as communicably coupled to each other via the system bus 610, thereby providing connectivity between the above-described components. In alternative implementations of the processor-based device 604, the above-described components may be communicably coupled in a different manner than illustrated in Figure 6. For example, one or more of the above-described components may be directly coupled to other components, or may be coupled to each other, via intermediary components (not shown). In some implementations, system bus 610 is omitted and the components are coupled directly to each other using suitable connections.

### REFERENCES

1. Norman, B., Pedoia, V. & Majumdar, S. Use of 2D U-Net Convolutional Neural Networks for Automated Cartilage and Meniscus Segmentation of Knee MR Imaging Data to Determine Relaxometry and Morphometry. Radiology 288, 177-185 (2018).
2. Lieman-Sifry, J., Le, M., Lau, F., Sall, S. & Golden, D. FastVentricle: Cardiac Segmentation with ENet. in Functional Imaging and Modelling of the Heart 127-138 (Springer International Publishing, 2017).
3. Shen, D. & Davatzikos, C. HAMMER: hierarchical attribute matching mechanism for elastic registration. IEEE Trans. Med Imaging 21, 1421-1439 (2002).
4. Ashbumer, J. & Friston, K. J. Voxel-Based Morphometry-The Methods. Neuroimage 11, 805-821 (2000).
5. Rueckert, D. et al. Nonrigid registration using free-form deformations: application to breast MR images. IEEE Trans. Med Imaging 18, 712-721 (1999).
6. Hu, Y. et al. Label-driven weakly-supervised learning for multimodal deformarle image registration. in 2018 IEEE 15th International Symposium on Biomedical Imaging (ISBI 2018) 1070-1074 (2018).
7. Balakrishnan, G., Zhao, A, Sabuncu, M. R., Guttag, J. & Dalca, A V. An Unsupervised Leaming Model for Deformable Medical Image Registration. in Proceedings of the IEEE Conference on Computer Vision and Pattern Recognition 9252-9260 (2018).
8. Lin, C.-H. & Lucey, S. Inverse Compositional Spatial Transformer Networks. arXiv [cs. CV] (2016).

## Claims

1. A machine learning system, comprising:
at least one nontransitory processor-readable storage medium that stores at least one of processor-executable instructions or data; and
at least one processor communicably coupled to the at least one nontransitory processor-readable storage medium, in operation the at least one processor:
receives learning data comprising a plurality of batches of unlabelled image sets, wherein each image set comprises a source image and target image that each represents a medical image scan of at least one patient;
trains one or more convolutional neural networks (CNNs) models, based on the learning data, to learn one or more transformation functions for coregistration of a target image onto a source image,
wherein the one or more CNNs models include a global network component that learns an affine transformation matrix and a local network component that learns a dense deformation field, and
wherein the global network component precedes the local network component in the one or more CNNs models; and
stores the one or more trained CNN models in the at least one nontransitory processor-readable storage medium of the machine learning system.

2. The machine learning system of claim 1 wherein the at least one processor trains the one or more CNN models using an unsupervised training algorithm, and wherein
the unsupervised training algorithm comprises a loss function that is calculated from a pair of source and target images and is not computed from any explicit human-created annotations on the images.

3. The machine learning system of claim 2 wherein the loss function includes a per-pixel root mean squared error between the source and target images.

4. The machine learning system of claim 2 wherein a differentiable objective function includes mutual information loss between the source and target images, an L2 loss between the source and target images, a center-weighted L2 loss function between the source and target images, or a normalized cross correlation loss function between the source and target images.

5. The machine learning system of claim 1 wherein the transformation functions include at least one of (a) affine transformations or (b) dense, nonlinear correspondence maps.

6. The machine learning system of claim 1 wherein the affine transformation matrix is calculated on the target image with respect to the source image.

7. The machine learning system of claim 1 wherein the global network model comprises a contracting path that includes at least one group of layers that comprises at least one of each of the following: convolution layer, max pooling layer, batch normalization layer, and dropout layer.

8. The machine learning system of claim 1 wherein the affine transformation matrix output by the global network model is inputted to an affine spatial transformation layer.

9. The machine learning system of claim 1 wherein the affine transformation matrix includes a regularization operation.

10. The machine learning system of claim 1 wherein the local network model comprises a contracting path and an expanding path,
the contracting path includes one or more convolutional layers and one or more pooling layers, each pooling layer preceded by at least one convolutional layer, and
the expanding path includes a number of convolutional layers and a number of upsampling layers, each upsampling layer preceded by at least one convolutional layer, and each upsampling layer comprises a transpose convolution operation which performs at least one of an upsampling operation and an interpolation operation with a learned kernel, or an upsampling operation followed by an interpolation operation.

11. The machine learning system of claim 1 wherein the local network dense deformation field output is inputted to a freeform similarity spatial transformer.

12. The machine learning system of claim 11 wherein the freeform similarity spatial transformer includes at least one of an affine transformation or a dense freeform deformation field warping.

13. The machine learning system of claim 1 wherein the local network dense deformation field output is regularized by a regularization operation.

## Patentansprüche

1. System zum maschinellen Lernen, umfassend:
mindestens ein nicht-flüchtiges, prozessorlesbares Speichermedium, das prozessorausführbare Befehle und/oder Daten speichert; und
mindestens einen Prozessor, der kommunikativ mit dem mindestens einen nicht-flüchtigen, prozessorlesbaren Speichermedium gekoppelt ist, wobei der mindestens eine Prozessor in Betrieb:
Lerndaten empfängt, die eine Vielzahl von Batches unmarkierter Bildsätze umfassen, wobei jeder Bildsatz ein Quellbild und ein Zielbild umfasst, die jeweils einen medizinischen Bild-Scan von mindestens einem Patienten darstellen;
ein oder mehrere Convolutional Neural Network (CNNs) - Modelle basierend auf den Lerndaten trainiert, um eine oder mehrere Transformationsfunktionen für die Koregistrierung eines Zielbildes auf ein Quellbild zu lernen,
wobei das eine oder die mehreren CNN-Modelle eine globale Netzwerkkomponente, die eine affine Transformationsmatrix lernt, und eine lokale Netzwerkkomponente, die ein dichtes Verformungsfeld lernt, umfassen, und
wobei die globale Netzwerkkomponente der lokalen Netzwerkkomponente in dem einen oder den mehreren CNN-Modellen vorausgeht; und
das eine oder die mehreren trainierten CNN-Modelle in dem mindestens einen nicht-flüchtigen, prozessorlesbaren Speichermedium des Systems zum maschinellen Lernen speichert.

2. System zum maschinellen Lernen nach Anspruch 1, wobei der mindestens eine Prozessor das eine oder die mehreren CNN-Modelle unter Verwendung eines Unsupervised Training - Algorithmus trainiert, und wobei
der Unsupervised Training - Algorithmus eine Verlustfunktion umfasst, die aus einem Paar von Quell- und Zielbildern berechnet wird und nicht aus expliziten, von Menschen erstellten Anmerkungen zu den Bildern berechnet wird.

3. System zum maschinellen Lernen nach Anspruch 2, wobei die Verlustfunktion eine Wurzel des mittleren quadratischen Fehlers pro Pixel zwischen den Quell- und Zielbildern einschließt.

4. System zum maschinellen Lernen nach Anspruch 2, wobei eine differenzierbare Zielfunktion den Verlust gegenseitiger Informationen zwischen den Quell- und Zielbildern, einen L2-Verlust zwischen den Quell- und Zielbildern, eine zentrumsgewichtete L2-Verlustfunktion zwischen den Quell- und Zielbildern oder eine normalisierte Kreuzkorrelationsverlustfunktion zwischen den Quell- und Zielbildern einschließt.

5. System zum maschinellen Lernen nach Anspruch 1, wobei die Transformationsfunktionen eine (a) affine Transformation und/oder (b) dichte, nichtlineare Zuordnungskarten einschließen.

6. System zum maschinellen Lernen nach Anspruch 1, wobei die affine Transformationsmatrix auf dem Zielbild in Bezug auf das Quellbild berechnet wird.

7. System zum maschinellen Lernen nach Anspruch 1, wobei das globale Netzwerkmodell einen kontrahierenden Pfad umfasst, der mindestens eine Gruppe von Schichten einschließt, jeweils mindestens eine der folgenden Schichten umfassend: Faltungsschicht, Max-Pooling-Schicht, Batch-Normalisierungsschicht und Dropout-Schicht.

8. System zum maschinellen Lernen nach Anspruch 1, wobei die affine Transformationsmatrix, die von dem globalen Netzwerkmodell ausgegeben wird, in eine affine räumliche Transformationsschicht eingegeben wird.

9. System zum maschinellen Lernen nach Anspruch 1, wobei die affine Transformationsmatrix eine Regularisierungsoperation einschließt.

10. System zum maschinellen Lernen nach Anspruch 1, wobei das lokale Netzwerkmodell einen Kontraktionspfad und einen Expansionspfad umfasst,
der Kontraktionspfad eine oder mehrere Faltungsschichten und eine oder mehrere Pooling-Schichten einschließt, wobei jeder Pooling-Schicht mindestens eine Faltungsschicht vorausgeht, und
der Expansionspfad eine Anzahl von Faltungsschichten und eine Anzahl von Upsampling-Schichten umfasst, wobei jeder Upsampling-Schicht mindestens eine Faltungsschicht vorausgeht und jede Upsampling-Schicht eine transponierte Faltungsoperation umfasst, die mindestens eine von einer Upsampling-Operation und einer interpolierenden Operation mit einem gelernten Kernel oder eine Upsampling-Operation, gefolgt von einer interpolierenden Operation, durchführt.

11. System zum maschinellen Lernen nach Anspruch 1, wobei die Ausgabe des dichten Verformungsfeldes im lokalen Netzwerk in einen Freeform Similarity Spatial Transformer eingegeben wird.

12. System zum maschinellen Lernen nach Anspruch 11, wobei der Freeform Similarity Spatial Transformer mindestens eine affine Transformation und/oder ein dichtes Freiform-Verformungsfeld-Warping einschließt.

13. System zum maschinellen Lernen nach Anspruch 1, wobei die Ausgabe des dichten Verformungsfeldes im lokalen Netzwerk durch eine Regularisierungsoperation reguliert wird.

## Revendications

1. Système d'apprentissage automatique, comprenant :
au moins un support de stockage lisible par processeur non transitoire qui stocke au moins une parmi des données ou instructions exécutables par processeur ; et
au moins un processeur couplé en communication à l'au moins un support de stockage lisible par processeur non transitoire, en fonctionnement l'au moins un processeur :
reçoit des données d'apprentissage comprenant une pluralité de lots d'ensembles d'images non étiquetées, dans lequel chaque ensemble d'images comprend une image source et une image cible qui représentent chacune un balayage d'image médicale d'au moins un patient ;
entraîne un ou plusieurs modèles de réseaux de neurones convolutifs (CNN), sur la base des données d'apprentissage, pour apprendre une ou plusieurs fonctions de transformation pour le recalage d'une image cible sur une image source,
dans lequel les un ou plusieurs modèles CNN comportent un composant de réseau global qui apprend une matrice de transformation affine et un composant de réseau local qui apprend un champ de déformation dense, et
dans lequel le composant de réseau global précède le composant de réseau local dans les un ou plusieurs modèles CNN ; et
stocke les un ou plusieurs modèles CNN entraînés dans l'au moins un support de stockage lisible par processeur non transitoire du système d'apprentissage automatique.

2. Système d'apprentissage automatique selon la revendication 1 dans lequel l'au moins un processeur entraîne les un ou plusieurs modèles CNN à l'aide d'un algorithme d'entraînement non supervisé, et dans lequel
l'algorithme d'entraînement non supervisé comprend une fonction de perte qui est calculée à partir d'une paire d'images source et cible et n'est pas calculée à partir d'annotations explicites créées par l'homme sur les images.

3. Système d'apprentissage automatique selon la revendication 2 dans lequel la fonction de perte comporte une erreur quadratique moyenne par pixel entre les images source et cible.

4. Système d'apprentissage automatique selon la revendication 2 dans lequel une fonction objective différentiable comporte une perte d'information mutuelle entre les images source et cible, une perte L2 entre les images source et cible, une fonction de perte L2 pondérée centrale entre les images source et cible ou une fonction de perte de corrélation croisée normalisée entre les images source et cible.

5. Système d'apprentissage automatique selon la revendication 1 dans lequel les fonctions de transformation comportent au moins une parmi (a) des transformations affine ou (b) des cartes de correspondance non-linéaires, denses.

6. Système d'apprentissage automatique selon la revendication 1 dans lequel la matrice de transformation affine est calculée sur l'image cible par rapport à l'image source.

7. Système d'apprentissage automatique selon la revendication 1 dans lequel le modèle de réseau global comprend un chemin de contraction qui comporte au moins un groupe de couches qui comprend au moins un de chacun des éléments suivants : couche de convolution, couche de regroupement maximum, couche de normalisation de lot et couche d'abandon.

8. Système d'apprentissage automatique selon la revendication 1 dans lequel la matrice de transformation affine délivrée par le modèle de réseau global est entrée dans une couche de transformation spatiale affine.

9. Système d'apprentissage automatique selon la revendication 1 dans lequel la matrice de transformation affine comporte une opération de régularisation.

10. Système d'apprentissage automatique selon la revendication 1 dans lequel le modèle de réseau local comprend un chemin de contraction et un chemin d'expansion,
le chemin de contraction comporte une ou plusieurs couches de convolution et une ou plusieurs couches de regroupement, chaque couche de regroupement étant précédée par au moins une couche de convolution, et
le chemin d'expansion comporte un nombre de couches de convolution et un nombre de couches de suréchantillonnage, chaque couche de suréchantillonnage étant précédée par au moins une couche de convolution, et chaque couche de suréchantillonnage comprend une opération de convolution transposée laquelle effectue au moins une parmi une opération de suréchantillonnage et une opération d'interpolation avec un noyau appris, ou une opération de suréchantillonnage suivie d'une opération d'interpolation.

11. Système d'apprentissage automatique selon la revendication 1 dans lequel la sortie de champ de déformation dense de réseau local est entrée dans un transformateur spatial de similarité de forme libre.

12. Système d'apprentissage automatique selon la revendication 11 dans lequel le transformateur spatial de similarité de forme libre comporte au moins une parmi une transformation affine ou une déformation de champ de déformation de forme libre dense.

13. Système d'apprentissage automatique selon la revendication 1 dans lequel la sortie de champ de déformation dense de réseau local est régularisée par une opération de régularisation.
